## Europäisches Patentamt
## European Patent Office
## Office européen des brevets

(19)

(11) Numéro de publication: **0 068 955**
**B1**

(12)

# FASCICULE DE BREVET EUROPEEN

(45) Date de publication du fascicule du brevet:
11.09.85

(21) Numéro de dépôt: 82401054.0

(22) Date de dépôt: 10.06.82

(51) Int. Cl.⁴: **C 08 F 20/34**, C 08 F 2/32,
D 21 H 3/38, C 02 F 1/56

(54) Nouvelles dispersions stables, eau dans huile, de polymères cationiques hydrosolubles à base d'acrylate de diméthylaminoéthyle salifié ou quaternisé, leur procédé de fabrication et leur application comme floculants.

(30) Priorité: 12.06.81 FR 8111617

(43) Date de publication de la demande:
05.01.83 Bulletin 83/1

(45) Mention de la délivrance du brevet:
11.09.85 Bulletin 85/37

(84) Etats contractants désignés:
DE FR GB

(56) Documents cités:
DE - A - 2 419 764
DE - A - 2 432 699
DE - A - 2 537 586
DE - A - 2 926 103

CHEMICAL ABSTRACTS, vol. 88, no. 24, 1978, page 38, no. 171027k, Columbus Ohio (USA);

Le dossier contient des informations techniques présentées postérieurement au dépôt de la demande et ne figurant pas dans le présent fascicule.

(73) Titulaire: SOCIETE FRANCAISE HOECHST Société anonyme dite:, 3, avenue du Général de Gaulle, F-92800 Puteaux (FR)

(72) Inventeur: Dunk, William, 1, Villa des Frênes, F-95500 Gonesse (FR)
Inventeur: Cabestany, Jean, 127, Boulevard Maxime Gorki, F-93240 Stains (FR)
Inventeur: Trouve, Claude, 18, Rue de la Grange, F-91330 Yerres (FR)

(74) Mandataire: Rinuy, Santarelli et al, 14, avenue de la Grande Armée, F-75017 Paris (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne de nouvelles dispersions stables, eau dans huile, de polymères cationiques hydrosolubles à base d'acrylate de diméthylaminoéthyle salifié ou quaternisé, leur procédé de fabrication et leur application.

La préparation de dispersions eau dans huile de polymères de l'acrylamide est décrite, entre autres, dans les brevets des Etats-Unis d'Amérique n° 3 384 393 et 3 826 771 et dans le brevet britannique n° 1 562 417.

Ces dispersions eau dans huile sont généralement obtenues par polymérisation d'une émulsion eau dans huile d'une solution aqueuse d'acrylamide ou d'une solution aqueuse d'acrylamide et d'un comonomère en présence d'un agent émulsifiant. Divers agents émulsifiants ont été proposés (cf. brevet français n° 2 333 815).

Par ailleurs, selon le brevet français n° 2 390 983 et la demande de brevet français n° 79-30711 (FR-A-2 471 391) déposés par la Demanderesse, on sait obtenir par polymérisation en émulsion eau dans huile, des polymères cationiques en poudre, solubles dans l'eau, à base d'acrylamide et d'acrylate de diméthylaminoéthyle salifié ou quaternisé, présentent une répartition uniforme des motifs cationiques le long des chaînes des copolymères.

Or, la Demanderesse a maintenant découvert de nouvelles dispersions stables, eau dans huile, de polymères cationiques hydrosolubles à base d'acrylate de diméthylaminoéthyle salifié ou quaternisé, contenant en proportions molaires plus de 5% de motifs cationiques uniformément répartis le long des chaînes des polymères.

Selon l'invention, on entand par acrylate de diméthylaminoéthyle salifié ou quaternisé soit un sel d'acide minéral fort de l'acrylate de diméthylaminoéthyle, comme le chlorhydrate d'acrylate de diméthylaminoéthyle soit un ammonium quaternaire obtenu par quaternisation de l'acrylate de diméthylaminoéthyle par un dialkyle sulfate en $C_1-C_4$ ou par un chlorure ou un bromure d'alkyle en $C_1-C_4$.

Selon l'invention, ces dispersions stables eau dans huile sont caractérisées par les points suivants pris en combinaison:

1° — elles possèdent une composition pondérale de 20 à 55% en polymères, de 20 à 45% d'huile, de 1 à 5% d'agents émulsifiants et le complément à 100% d'eau;

2° — les polymères sont à base d'acrylate de diméthylaminoéthyle salifié ou quaternisé pur ou en mélange avec de l'acrylamide, celui-ci étant alors en proportions molaires inférieures ou égales à 95%;

3° — la phase huile est constituée par un ou plusieurs alcanes normaux en $C_{10}-C_{13}$ présentant un point d'ébullition compris entre 180 et 270°C;

4° — les agents émulsifiants sont constitués d'au moins deux agents émulsifiants dont l'un possède un HLB compris entre 3 et 5 et présente une bonne solubilité dans la phase huile à la température ambiante et un groupement lipophile constitué par une chaîne carbonée ramifiée ayant au moins 16 atomes de carbone, et l'autre possède un HLB moyen compris entre 12 et 16.

De façon avantageuse, le premier agent émulsifiant est choisi parmi les esters de l'acide isostéarique et de sorbitanne; on citera notamment l'isostéarate de sorbitanne et le sesquiisostéarate de sorbitanne.

Quant au second agent émulsifiant, il est avantageusement choisi parmi les alkylphénols éthoxylés, les esters d'acides gras de sorbitanne polyéthoxylés comme par exemple les nonylphénols éthoxylés au taux d'éthoxylation de 8 à 20, les octylphénols éthoxylés au taux d'éthoxylation de 9 à 11, le monooléate de sorbitanne éthoxyle avec 20 moles d'oxyde d'éthylène.

Suivant une autre caractéristique, les pourcentages pondéraux respectifs des deux agents émulsifiants sont compris entre 0,5 et 3% par rapport au poids total de la dispersion.

Pour mémoire, on désigne par HLB, la balance hydrophile — lipophile d'un agent émulsifiant, c'est-à-dire l'équilibre entre la dimension et la force de groupes hydrophiles, d'une part, et des groupes lipophiles, d'autre part, de l'agent émulsifiant. Une définition du HLB est donné par W.C. GRIFFIN dans — Classification of Surface Active Agents by HLB — J.Soc. Cosmetic Chemists, 1950, page 311.

On appelle communément acide isostéarique, un mélange en proportions variables d'acides heptadécanoïques substitués par un groupe méthyle sur un des atoms de carbone numérotés de 2 à 16.

Les dispersions selon l'invention sont en outre caractérisées par:

Une stabilité supérieure à 4 mois à la température de 20—25°C;
Une solubilité dans l'eau instantanée;
Une viscosité intrinsèque des polymères inclus, déterminée à 25°C en solution molaire de chlorure de sodium supérieure à 9 dl/g;
Une viscosité à 20°C déterminée au viscosimètre de Brookfield, modèle RVT, à la vitesse de 50 tours par minute, supérieure à 0,3 pascal-seconde

Une vitesse à 1% en solution aqueuse, déterminée à 20°C au viscosimètre de Brookfield, modèle RVT, à la vitesse de 20 tours par minute sur les polymères inclus, supérieure à 3,5 pascal-seconde.

Une absence totale de coagulum.

L'invention a aussi pour object le procédé de fabrication de ces dispersions par polymérisation du ou des monomères en émulsion inverse eau dans huile, à pH compris entre 3 et 6, en présence d'un agent d'amorçage.

L'amorçage de la réaction de polymérisation est réalisée avec des amorceurs radicalaires qui peuvent donner naissance à des radicaux libres par décomposition thermique ou par décomposition couplée. De tels amorceurs radicalaires sont connus et ils appartiennent, par exemple, aux familles des peroxydes minéraux ou organiques, des azoïques aliphatiques, des systèmes rédox. Ces amorceurs radicalaires peuvent être soit hydrosolubles, soit liposolubles soit enfin partiellement solubles dans l'eau.

Avantageusement, selon le procédé de l'invention, l'amorceur radicalaire choisi génère radicaux libres liposolubles dans la phase continue tels que le couples hydroperoxyde de cumène — métabisulfite de sodium, hydroperoxyde de tertiobutyle-diméthyltétradécanamine.

L'amorçage de la réaction de polymérisation est effectuée à une température comprise entre +5 et +55°C. Lorsque la réaction d'amorçage est exécutée avec un système rédox fournissant des radicaux libres dans la phase continue, on l'effectue avantageusement à une température inférieure ou égale à +10°C. Par contre, lorsqu'on emploie un azoïque aliphatique tel que l'azo-2,2 bis (amidino -2 propane) dichlorhydrate, l'azobisiso-butyronitrile, la réaction d'amorçage est effectuée à une température inférieure ou égale à 55°C.

La réaction de polymérisation ne permet pas d'obtenir directement des dispersions eau dans huile présentent une composition pondérale supérieure à 40% en polymères. Afin de préparer des dispersions selon l'invention contenant en poids jusqu'à 55% de polymères, en fin de réaction de polymérisation, on concentre par distillation ces dispersions jusqu'à la concentration désirée. Cette opération de distillation est possible grâce à l'excellente stabilité des dispersions selon l'invention.

Selon le procédé de l'invention, la réaction de polymérisation est réalisée au départ d'une émulsion eau dans huile contenant en poids de 20 à 40% de monomère (s), de 20 à 45% d'huile, de 0,5 à 3% d'un agent émulsifiant de HLB compris entre 3 et 5 tel que défini précédemment, puis après amorçage de la polymérisation selon les moyens cités plus haut, la réaction de polymérisation est conduite de manière adiabatique, c'est-à-dire sans refroidissement extérieur. On sait que la polymérisation des acrylates et de l'acrylamide est exothermique. Il est donc nécessaire de disposer d'une émulsion eau dans huile stable à un tel choc thermique. Cette stabilité de l'émulsion, indépendante de la température, désignée parfois par stabilité entropique, est apportée par l'emploi d'un agent émulsifiant bien particular défini précédemment.

Cette excellente stabilité thermique des dispersions selon l'invention autorise ensuite, si nécessaire, leur concentration par distillation jusqu'à une composition pondérale inférieure ou égale à 55% en polymères.

La combinaison des différents facteurs du procédé selon l'invention: choix du ou des monomères, de la phase continue, des agents émulsifiants et de l'agent d'amorçage, de l'initiation de la polymérisation à une température inférieure ou égale à 10°C lorsqu'on utilise un couple redox et d'une réaction de polymérisation conduite de manière adiabatique entraîne d'une part, une cinétique rapide de polymérisation caractérisée par les paramètres cinétiques suivants où $\theta$ représente la température et t le temps:

$\theta$ maximale — $\theta$ initiale: inférieure ou égale à 90°C;

$$\left(\frac{d\theta}{dt}\right)_{maximum} : \text{inférieur ou égal à } 30°C/min.$$

$$\frac{\Delta\theta}{\Delta t} : \text{compris entre 1 et } 10°C/min.$$

et, d'autre part, fournit une dispersion eau dans huile de polymères à base d'acrylate de diméthylaminoéthyle salifié ou quaternisé présentant une viscosité intrinsèque, déterminée à 25°C en solution molaire de chlorure de sodium toujours supérieure à 9 dl/g.

Plus précisément, lorsque la polymérisation est amorcée avec une système rédox, le procédé selon l'invention est mis en œuvre au départ d'une émulsion eau dans huile du ou des monomères obtenue, par addition sous agitation à 20±2°C, de la solution aqueuse du ou des monomères et éventuellement du constituant soluble dans l'eau du couple rédox choisi, dans la phase huile contenant l'agent émulsifiant à bas HLB. L'émulsion ainsi préparée peut être avantageusement homogénéisée pendant quelques secondes avec un broyeur à colloïdes puis elle est soigneusement désoxygénée par un barbotage d'azote pur et enfin elle est refroidie à une température inférieure ou égale à 10°C. A cette

3

température, sous agitation et en atmosphère inerte, la réaction de polymérisation est amorcée par addition soit de deuxième constituant du couple rédox soit du couple rédox lorsque ses deux constituants sont solubles dans la phase continue.

La réaction de polymérisation est conduite de manière adiabatique et lorsque la température du milieu réactionnel commence à décroître, on la maintient par un léger chauffage extérieur pendant 0,1 à 4 heures, puis le milieu réactionnel est refroidi vers 40 ± 5° C, température à laquelle on introduit le deuxième agent émulsifiant de HLB compris entre 12 et 16. A ce stade, la dispersion peut être soit utilisée telle quelle soit concentrée par distillation jusqu'à une concentration pondérale de 55% en polymères.

Lorsque la réaction de polymérisation est amorcée par un azoïque aliphatique, le procédé selon l'invention est effectué comme précédemment jusqu'à la phase de désoxygénation de l'émulsion eau dans huile contenant le ou les monomères, l'agent est chauffée sous agitation et en atmosphère inerte à la vitesse de 1 ± 0,5° C, par minute jusqu'à une température inférieure ou égale à 55° C. L'amorçage de la polymérisation ainsi effectué on laisse se développer la réaction exothermique de manière adiabatique, puis lorsque la température du milieu réactionnel commence à décroître, le procédé est poursuivi comme précédemment par un léger chauffage et l'addition du deuxième agent émulsifiant. On obtient ainsi une dispersion selon l'invention qui peut être soit utilisée telle qelle, soit concentrée par distillation jusqu'à une concentration pondérale de 55% en polymères.

L'invention a aussi pour object l'application des dispersions selon l'invention en tant qu'agents floculants par exemple pour la clarification des eaux brutes et des eaux résiduaires, aux traitements des boues urbaines ou dans l'industrie papetière. Dans ces applications, on utilise des solutions très diluées de sorte que les dispersions selon l'invention doivent être diluées à l'eau ce qui s'effectue aisément.

On sait que les propriétés floculantes d'un polymère cationique hydrosoluble sont, d'une part, d'autant meilleures que le poids moléculaire moyen de ce polymère est plus élevé et, d'autre part, fonction de déploiement maximum des chaînes du polymère. Les polymères des dispersions selon l'invention présentant toujours une viscosité intrinsèque supérieure à 9 dl/g sont, d'après la loi de Mark-Houwink, constituées de polymères de poids moléculaire moyen élevé. Le déploiement maximum des chaînes d'un polymère cationique en solution aqueuse diluée est assuré par la répartition alternée et non statistique des sites cationiques le long des chaînes de polymères.

Selon la demande de brevet français n° 79-30711 (FR-A-2 471 391) on sait que les rapports de réactivité du couple acrylamide — acrylate de diméthylaminoéthyle salifié ou quaternisé sont particulièrement favorables à une distribution régulière des motifs cationiques le long des chaînes des polymères quels que soient le taux de transformation et/ou la composition initiale en monomères. Dans les dispersions selon l'invention ces deux facteurs: poids moléculaire moyen élevé et déploiement maximum des chaînes en solution aqueuse diluée étant réunis, elles présentent une très bonne efficacité dans le traitement des eaux. De surcoit, l'éventail le leur cationicité étant très large, elles conviennent aussi bien pour des eaux peu chargées que très chargées, en matières en suspension et elles sont aussi appropriées à la coalescence des émulsions et/ou à la floculation des suspensions très colloidales hydrophiles à forter teneur en matières volatiles. Ces qualités étonnantes des dispersions selon l'invention sont mises en évidence au moyen d'un test de floculation. Ce test consiste à floculer une boue en un temps donné avec les dispersions selon l'invention. Dans la réalisation pratique de ce test, on détermine la quantité nécessaire exprimée en kg de polymères secs par tonne de boue sèche, de dispersion selon l'invention pour obtenir en un temps donné une sédimentation moitié c'est-à-dire une hauteur de boue décantée moitié de la hauteur initiale de boue traitée. En comparant par ce test différentes dispersions selon l'invention sur des boues provenant soit de la station d'épuration d'Achères de l'agglomération parisienne amenées à 8,5 g/l soit sur des boues de la station d'épuration de la ville de Creil amenées à 7,5 g/l et en fixant un temps de sédimentation moitié de 45 à 75 secondes, on obtient les résultats suivants donnés dans les tableaux 1 et 2.

Tableau 1

Test sur boues d'Achères à 8,5 g/l
Temps de sédimentation moitié: 50 sec

CHA          100% selon exemple 1          3,33 kg/t

Tableau 2

Tests sur boues de Creil à 7,5 g/l
Temps de sédimentation moitié: 70 sec

AAM/CHA          70/30 selon exemple 2          1,82 kg/t
AAM/CHA          70/30 selon exemple 4          1,67 kg/t

4

Les exemples suivants sont donnés à titre explicatif et nullement limitatif de l'invention. Dans ces exemples, l'acrylamide est désignée par AAM, le chlorhydrate d'acrylate de diméthylaminoéthyle par CHA, l'acrylate de diméthylaminoéthyle quaternisé par le chlorure de méthyle par CMA, l'acrylate de diméthylaminoéthyle quaternisé par le diméthylsulfate par MSA; les viscosités intrinsèques sont déterminées à 25°C en solution molaire de chlorure de sodium.

## Exemple 1

Dans une solution de 21 g des sesquiisostéarate de sorbitanne dans 300 g d'alcanes normaux en $C_{10}-C_{13}$ présentant un point d'ébullition compris entre 195 et 230°C, on introduit sous agitation une solution de 400 g de CHA et de 0,2625 g de dichlorhydrate d'azo-2,2(amidino-2 propane) dans 300 g d'eau. L'émulsion formée est ensuite soumise pendant quelques secondes à une agitation vigoureuse avec un broyeur à colloides. On obtient ainsi une dispersion eau dans huile du monomère présentant une viscosité de 5 poises, déterminée à 20°C avec un viscosimètre de Brookfield modèle RVT tournant à 50 tours par minute. Après désoxygénation soigneuse par un barbotage d'azote, l'émulsion est chauffée à 40°C à la vitesse de 1°C par minute. A cette température, la réaction de polymérisation démarre et la température du milieu réactionnel atteint $60 \pm 2°C$ en 8 minutes. On maintient le milieu réactionnel pendant 3 heures à cette température, puis on le chauffe 30 min à 75°C. A ce stade, une prise d'essai révèle une concentration en monomère résiduel inférieure ou égale à 0,1%. On introduit ensuite en 15 minutes dans l'émulsion refroidie à 40°C, 20 g de nonylphénol éthoxyle avec 10 moles d'oxyde d'éthylène, puis la dispersion est amenée à la température ambiante. On obtient ainsi une dispersion eau dans huile d'homopolymère de CHA contenant en poids 38,5% de polymère, 28,8% d'huile, 3,9% d'agents émulsifiants et 28,8% d'eau et présentant une viscosité intrinsèque de 10, 1 dl/g, une viscosité à 1% dans l'eau déterminée à 20°C au viscosimètre de Brookfield, modèle RVT, à la vitesse de 20 tours par minute de 2375 mPa.s et une viscosité sur produit tel quel déterminée à 20°C au viscosimètre de Brookfield à la vitesse de 50 tours par minute de 480 mPa.s.

Cette dispersion est stable, au moins pendant 4 mois à la température ambiante.

## Exemple 2

Dans une solution de 22 g d'isostéarate de sorbitanne dans 260 g d'alcanes normeaux en $C_{10}-C_{12}$ présentant un point d'ébullition compris entre 195 et 230°C, on introduit sous agitation une solution présentant un pH de 5,2, de 189 g de CMA, de 161 g d'AAM, de 0,0525 g de peroxodisulfate d'ammonium dans 390 g d'eau. L'émulsion formée est ensuite soumise durant quelques secondes à l'action d'un broyeur à colloides, puis elle est soigneusement désoxygénée par un barbotage d'azote et enfin elle est refroidie à 5°C. A cette température, sous agitation et en atmosphère inerte, on introduit une solution de 0,03 g de sulfite de sodium dans 2 g d'eau.

Après quelques minutes, la température du milieu réactionnel s'élève rapidement à 62°C à la vitesse maximale de 22°C par minute. Lorsque la température du milieu réactionnel décroît à 60°C, on le chauffe à 75°C pendant 30 minutes, puis on le refroidit à 40°C. A cette température, on introduit 20 g de nonylphénol éthoxylé avec 10 moles d'oxyde d'éthylène et ensuite le milieu réactionnel est refroidi à la température ambiante. On obtient ainsi une dispersion selon l'invention contenant en poids 33,5% de polymères AAM/CHA 70/30 en proportions molaires, 24,9% d'huile, 4,2% d'agents émulsifiants et 37,4% d'eau, présentant une viscosité de 350 mPa . s déterminée à 20°C au viscosimètre de Brookfield tournant à 50 tours par minute. Le polymère dispersé présente une viscosité à 1% dans l'eau déterminé à 20°C au viscosimètre de Brookfield tournant à la vitesse de 20 tours par minute de 3600 mPa . s et une viscosité intrinsèque de 10,2 dl/g. Cette dispersion est stable, au moins pendant 4 mois à la température ambiante.

## Exemple 3

Dans une solution de 22,2 g de sesquiisostéarate de sorbitanne dans 260 g alcanes normeaux en $C_{10}-C_{13}$ présentant un point d'ébullition compris entre 195 et 230°C, on introduit sous agitation une solution présentant un pH = 3,5, de 168 g (2,37 moles) d'acrylamide, de 181,9 g (1,015 mole) de CHA dans 390 g d'eau. L'émulsion formée est ensuite soumise pendant quelques secondes à l'action d'un broyeur à colloides, puis elle est soigneusement désoxygénée par un barbotage d'azote pur et enfin elle est refroidie à 1°C. A cette température, sous agitation et en atmosphère inerte, on introduit une solution de 0,0525 g d'hydroperoxyde de cumène dans 10 cm³ d'alcanes normeaux en $C_{10}-C_{13}$, puis en 20 minutes une solution de 0,222 g de métabisulfite de sodium dans 30 g d'eau. La température de milieu réactionnel s'élève rapidement à 48°C en 12 min des le début de l'addition du métabisulfite de sodium. Lorsque l'introduction est terminée, on maintient le milieu réactionnel 1 heure à 70°C, puis on le refroidit à 40°C. A cette température, on introduit 20 g de nonylphénol éthoxylé à 10 moles d'oxyde d'éthylène, puis la dispersion obtenue est refroidie à la température ambiante. On obtient ainsi une dispersion eau dans huile contenant en poids 32,4% de polymères AAM/CHA, 70/30 en proportions molaires, 24,8% d'huile, 3,9% d'agents émulsifiants et 38,9% d'eau.

Cette dispersion présente une viscosité de 788 mPa.s déterminée à 20°C au viscosimètre de Brookfield, modèle RVT tournant à la vitesse de 50 tours par minute. Le polymère dispersé présente une viscosité à 1% dans l'eau de 5400 mPa.s déterminée à 20°C au viscosimètre de Brookfield modèle RVT et une viscosité intrinsèque de 17,5 dl/g.

Cette dispersion est stable, au moins pendant 4 mois à la température ambiante.

## Exemple 4

On prépare selon l'exemple 3, une dispersion eau dans huile à 33,6% en poids de copolymère AAM/CHA 70/30 en proportions molaires présentant à 20°C au viscosimètre de Brookfield modèle RVT, une viscosité de 350 mPa . s. On chauffe sous agitation à 70°C pendant 75 minutes, 250 g de cette dispersion dans un bécher ouvert. Après refroidissement à la température ambiante, on n'observe aucune formation de gel ni sur les parois du bécher, ni sur d'agitateur et on obtient une dispersion eau dans huile d'un copolymère AAM/CHA, 70/30 en proportions molaires contenant en poids 50,4% de copolymère déterminé par précipitation dans l'acétone, stable durant 4 mois de stockage à la température ambiante.

## Exemple 5 comparatif

On reproduit l'exemple 4 au départ d'une dispersion eau dans huile à 33,6% en poids de copolymère AAM/CHA 70/30 en proportions molaires préparée comme dans l'exemple 3 mais un utilisant au lieu du sesquiisostéarate de sorbitanne, le monooléate de sorbitanne ayant aussi un HLB de 3 à 5, on obtient au cours de chauffage une coagulation importante de la dispersion. Après refroidissement à la température ambiante et élimination du gel formé par filtration, on obtient une dispersion polymérisée dans l'huile instable au stockage.

## Exemple 6

On prépare, selon une technique similaire à celle décrite à l'exemple 3, une dispersion, eau dans huile, présentant une viscosité Brookfield de 300 mPa . s (vitesse 50 tr/min) et contenant en poids 28,7% de copolymères AAM/CHA 92-8 en proportions molaires, possédant une viscosité intrinsèque de 15 dl/g.

Dans une machine à papier industrielle, équipée d'un système d'alimentation en agent floculant dit de rétention et travaillant avec une pâte à papier de concentration en matières sèches de 8 g/l, constituée de 55% de fibres, de 31% de casses (papiers de récupération), de 14% de carbonate de calcium ainsi que des traces d'adjuvants divers tels que de l'amidon cationique, de la colle, on introduit, en solution aqueuse à une concentration de 20 g/l, la dispersion eau dans huile précédente contenant en poids 28,7% de copolymères AAM/CHA 92-8 en porportions molaires.

Puis, on détermine le rétention à la passe en fonction des quantités de dispersions selon l'invention introduites.

La rétention à la passe est donnée par la formule suivante:

$$RP = \frac{CCT - CEB \cdot 100}{CCT}$$

où RP: rétention à la passe,
CCT: concentration de la pâte en caisse de tête,
CEB: concentration en pâte des eaux blanches.

On obtient les résultats suivants exprimés en kg de dispersion par tonne de papier fabriqué:

**0 068 955**

Collage neutre, pH de la pâte: 7,5

| Dosage en kg/tonne de papier fabriqué | Rétention à la passe |
|---|---|
| 1,5 | 72,5% |
| 1,6 | 73,45% |
| 1,8 | 75,45% |

Collage acide, pH de la pâte: 5,5

| Dosage en kg/tonne de papier fabriqué | Rétention à la passe |
|---|---|
| 0,4 | 55,1% |
| 0,5 | 64,3% |

Il va de soi que l'invention n'a été décrite qu'à titre purement explicatif nullement limitatif.

**Revendications**

1. Dispersions eau dans huile, stables à la température ambiante pendant plus de quatre mois, de polymères cationiques hydrosolubles caractérisées par le fait qu'elles présentent une composition pondérale de 20 à 55% en polmères présentant une viscosité intrinsèque supérieure à 9 dl/g déterminée à 25°C en solution molaire de chlorure de sodium, à base d'acrylate de diméthylaminoéthyle salifié ou quaternisé, homopolymérisé ou copolymérisé avec de l'acrylamide et contenant en proportions molaires plus de 5% de motifs cationiques uniformément et non statistiquement répartis le long des chaînes de polymères, de 20 à 45% d'un alcanes normaux en $C_{10}-C_{13}$, de 1 à 5% de deux agents émulsifiants dont de 0,5 à 3% d'isostéarate de sorbitanne ou de sesquiisostéarate de sorbitanne et de 0,5 à 3% d'un agent émulsifiant de valeur HLB comprise entre 12 et 16 et le complément à 100% d'eau.

2. Dispersions stables eau dans huile selon la revendication 1, caractérisées par le fait que le second agent émulsifiant est choisi parmi les alkylphénols éthoxylés, les esters d'acides gras de sorbitanne polyéthoxylés, par exemple les nonylphénols éthoxylés au taux d'éthoxylation de 8 à 20, les octylphénols éthoxylés au taux d'éthoxylation de 9 à 11 ou le monooléate de sorbitanne éthoxylé avec 20 moles d'oxyde d'éthylène.

3. Dispersions stables eau dans huile selon l'une des revendications 1 ou 2, caractérisée par le fait qu'elles présentent en outre l'ensemble des caractéristiques physiques suivantes: une solubilité dans l'eau instantanée; une viscosité à 20°C déterminée au viscosimètre de Brookfield, modèle RVT, à la vitesse de 50 tours par minute, supérieure à 0,3 pascal-seconde; une viscosité à 1% en solution aqueuse, déterminée à 20°C au viscosimètre de Brookfield, modèle RVT, à la vitesse de 20 tours par minute sur les polymères inclus, supérieure à 3,5 pascal-seconde; une absence totale de coagulum.

4. Dispersions stables eau dans huile selon l'une quelconque des revendications 1 à 3, caractérisées par le fait que l'acrylate de diméthylaminoéthyle est salifié par l'acide chlorhydrique.

5. Dispersions stables eau dans huile selon l'une quelconque des revendications 1 à 3, caractérisées par le fait que l'acrylate de diméthylaminoéthyle est quaternisé par le chlorure de méthyle.

6. Dispersions stables eau dans huile selon l'une quelconque des revendications 1 à 3, caractérisées par le fait que l'acrylate de diméthylaminoéthyle est quaternisé par le diméthylsulfate.

7. Procédé de fabrication des dispersions selon l'une quelconque des revendications 1 à 6, caractérisée par le fait que l'on polymérise sous agitation, en atmosphère inerte, et sans refroidissement extérieur une émulsion eau dans huile désoxygénée contenant en poids par rapport au poids final de la dispersion de 20 à 40% d'acrylate de diméthylaminoéthyle salifié ou quaternisé et d'acrylamide dans des proportions molaires respectives de 100% à 5% et de 0% à 95%, de 20 à 45% d'alcanes normaux en $C_{10}-C_{13}$, de 0,5 à 3% d'isostéarate de sorbitanne ou de sesquiisostéarate de sorbitanne, de 10 à 59% d'eau, avec un amorçage de la polymérisation par un système générateur de radicaux libres, soit à une température inférieure ou égale à 10°C lorsque l'on utilise un couple rédox, soit à une température inférieure ou égale à 55°C lorsque l'on utilise un azoïque aliphatique, qu'en fin réaction exothermique on maintient le milieu réactionnel à une température comprise entre 60 et 80°C par un chauffage

7

extérieur durant 0,1 à 4 heures, qu'ensuite dans la dispersion refroidie à 40 ± 5° C, on ajoute de 0,5 à 3% d'un agent émulsifiant présentant un HLB compris entre 12 et 16 et qu'éventuellement la dispersion obtenue est concentrée par distillation jusqu'à une concentration pondérale pouvant atteindre 55% en polymères.

8. Procédé selon la revendication 7, caractérisée par le fait que le système générateur de radicaux libres utilisé génère des radicaux libres solubles dans la phase huile.

9. Application des dispersions stables eau dans huile selon l'une quelconque des revendications 1 à 8, en tant qu'agents floculants.

10. Application selon la revendication 9, caractérisée par le fait que ces dispersions sont utilisées pour la floculation des boues urbaines.

11. Application selon la revendication 9, caractérisée par le fait que ces dispersions sont utilisées pour la coalescence des émulsions.

12. Application selon la revendication 9, dans l'industrie papetière en tant qu'agents de rétention.


**Patentansprüche**

1. Wasser-in-Öl-dispersionen von wasserlöslichen, kationischen Polymeren mit einer Beständigkeit bei Umgebungstemperatur für mehr als vier Monate, dadurch gekennzeichnet, daß sie eine Gewichtszusammensetzung von 20 bis 55% an Polymeren mit einer grundmolaren Viskositätszahl oberhalb von 9 dl/g, bestimmt bei 25° C in molarer Natriumlösung, auf Basis von Dimethylaminoethylacrylat, in Salzform oder quaternisiert, homopolymerisiert oder mit Acrylamid copolymerisiert und mit einem Molgehalt von mehr als 5% gleichförmig und nicht statisch längs der Ketten des Polymeren verteilten, kationischen Einheiten, von 20 bis 45% eines Gemisches von $C_{10}-C_{13}$-n-Alkanen, von 1 bis 5% zweier Emulgatoren, wovon 0,5 bis 3% Sorbitanisostearat oder Sorbitansesquiisostearat und 0,5 bis 3% ein Emulgator mit einem HLB-Wert zwischen 12 und 16 sind, und als Rest auf 100% Wasser.

2. Wasser-in-Öl-dispersionen nach Anspruch 1, dadurch gekennzeichnet, daß der zweite Emulgator aus ethoxylierten Alkylphenolen, polyethoxylierten Sorbitanestern von Fettsäuren, beispielsweise ethoxylierten Nonylphenolen mit einem Ethoxylierungsgrad von 8 bis 20, ethoxylierten Octylphenolen mit einem Ethoxylierungsgrad von 9 bis 11 oder ethoxyliertem Sorbitanmonooleat mit 20 mol Ethylenoxid, ausgewählt ist.

3. Wasser-in-Öl-dispersionen nach einem der Ansprüche 1 oder 2, dadurch gekennzeichnet, daß sie Gesamtheit der folgenden physikalischen Eigenschaften aufweisen: eine sofortige Löslichkeit in Wasser; eine Viskosität bei 20°C, bestimmt mittels eines Brookfield-Viskosimeters, Modell RVT, bei einer Geschwindigkeit von 50 Upm, oberhalb von 0,3 Pascalsekunden (Pa sec); eine Viskosität bei 1% in wäßriger Lösung, bestimmt bei 20°C mit einem Brookfield-Viskosimeter, Modell RVT, bei einer Geschwindigkeit von 20 Upm über den eingeschlossenen Polymeren, oberhalb von 3,5 Pascalsekunden (Pa sec) ein vollständiges Fehlen von Koagulat.

4. Wasser-in-Öl-dispersionen nach einem der Ansprüche 1 bis 3, dadurch gekennzeichnet, daß das Dimethylaminoethylacrylat mittels Chlorwasserstoffsäure in Salzform vorliegt.

5. Wasser-in-Öl-dispersionen nach einem der Ansprüche 1 bis 3, dadurch gekennzeichnet, daß das Dimethylaminoethylacrylat durch Methylchlorid quaternisiert ist.

6. Wasser-in-Öl-dispersionen nach einem der Ansprüche 1 bis 3, dadurch gekennzeichnet, daß das Dimethylaminoethylacrylat mit Dimethylsulfat quaternisiert ist.

7. Verfahren zur Herstellung von Dispersionen nach einem der Ansprüche 1 bis 6, dadurch gekennzeichnet, daß man unter Rühren in inerter Atmosphäre und ohne äußeres Kühlen eine Wasseremulsion in von Sauerstoff befreitem Öl polymerisiert, welche in Gewicht, bezogen auf das Endgewicht der Dispersion, enthält:

20 bis 40% Dimethylaminoethylacrylat, in Salzform oder quaternisiert und Acrylamid in jeweiligen Molverhältnissen von 100% bis 5% und von 0% bis 95%,

20 bis 45% $C_{10}-C_{13}$-n-Alkane,

0,5 bis 3% Sorbitanisostearat oder Sorbitansesquiisostearat,

10 bis 59% Wasser,

mit einem Starten der Polymerisation durch ein System zur Bildung freier Radikale entweder bei einer Temperatur unterhalb oder gleich 10° C bei Verwendung eines Redoxpaares oder bei einer Temperatur unterhalb oder gleich 55° C bei Verwendung einer aliphatischen Azoverbindung,

daß man bei Ende der exothermen Reaktion das Reaktionsmedium auf einer Temperatur zwischen 60 und 80°C durch äußeres Erhitzen während 0,1 bis 4 Stunden hält, daß anschließend die auf 40 ± 5°C abgekühlte Dispersion 0,5 bis 3% eines Emulgators zugegeben werden, der einen HLB-Wert zwischen 12 und 16 aufweist, und

daß gegebenenfalls die erhaltene Dispersion durch Destillation bis auf eine Gewichtskonzentration, die 55% an Polymeren erreichen kann, konzentriert wird.

8. Verfahren nach Anspruch 7, dadurch gekennzeichnet, daß das eingesetzte System zur Bildung freier Radikale in der Ölphase lösliche, freie Radikale bildet.

**0 068 955**

9. Verwendung von Wasser-in-Öl-dispersionen nach einem der Ansprüche 1 bis 8 als Flockungsmittel.

10. Verwendung nach Anspruch 9, dadurch gekennzeichnet, daß diese Dispersionen zum Flocken von städtischen Schlämmen verwendet werden.

11. Verwendung nach Anspruch 9, dadurch gekennzeichnet, daß diese Dispersionen zum Koaleszieren von Emulsionen verwendet werden.

12. Verwendung nach Anspruch 9 in der Papierindustrie als Retentionsmittel.

**Claims**

1. Water in oil dispersions stable at the ambient temperature for more than four month, of water soluble cationic polymers, characterized in that they present a composition by weight of 20 to 55% in polymers presenting an intrinsic viscosity higher than 9 dl/g as determined at 25° C in molar solution of sodium chloride based on salified or quaternized dimethylaminoethyl acrylate, homopolymerized or copolymerized with acrylamide, and containing in molar proportions more than 5% of cationic units uniformly and not statistically distributed along the polymer chains, from 20 to 45% of a mixture of $C_{10}$—$C_{13}$-n-alkanes, from 1 to 5% of two emulsifying agents from which from 0,5 to 3% of sorbitane isostearate or sorbitane sesquiisostearate and from 0,5 to 3% of an emulsifying agent of HLB value comprised between 12 and 16, with complement to 100% of water.

2. Stable water in oil dispersions according to claim 1, characterized in that the second emulsifying agent is selected from the ethoxylated alkylphenols, the polyethoxylated esters of sorbitane fatty acids, for example, ethoxylated nonylphenols with ethoxylation rate of 8 to 20, the ethoxylated octylphenols of an ethoxylation rate of 9 to 11 or the sorbitane mono-oleate ethoxylated with 20 moles of ethylene oxide.

3. Stable water in oil dispersions according to any of claims 1 or 2, characterized in that they also present all of the following physical characteristics: an instantaneous solubility in water; a viscosity at 20° C as dertermined by a Brookfield viscosimeter, model RVT, at a speed of 50 revolutions per minute, which is higher than 0,3 Pascal-second; a viscosity at 1% in aqueous solution as determined et 20° C by a Brookfield viscosimeter, model RVT, at a speed of 20 revolutions per minute, on included polymers, which is higher than 3,5 Pascal-second; total absence of coagulum.

4. Stable water in oil dispersions according to any one of claims 1 through 3, characterized in that the dimethylaminoethyl acrylate is salified by hydrochloric acid.

5. Stable water in oil dispersions according to any one of claims 1 to 3, characterized in that the dimethylaminoethyl acrylate is quaternized by methyl chloride.

6. Stable water in oil dispersions according to any one of claims 1 to 3, characterized in that dimethylamino-ethyl acrylate is quaternized by dimethylsulfate.

7. A process for production of the dispersions according to any one of claims 1 to 6, characterized by polymerizing under stirring in inert atmosphere and without external cooling, a deoxygenated water in oil emulsion containing by weight relative to the final weight of the dispersion from 20 to 40% of salified or quaternized dimethylamino-ethyl acrylate and acrylamide in respective molar proportions of 100% to 5% and from 0% to 95%, from 20 to 45% of $C_{10}$—$C_{13}$-n-alkanes, from 0,5 to 3% of sorbitane isostearate or sorbitane sesquiisostearate, from 10 to 59% of water; with polymerisation initiation by a free radical generator system either at a temperature lower than or equal to 10° C, when a redox couple is used or at a temperature lower than or equal to 55° C, when an aliphatic azoic is used; maintaining upon completing exothermal reaction the reactional medium at a temperature comprised between 60 and 80° C by external heating for 0,1 to 4 hours; adding thereafter into the cool dispersion at $40 \pm 5°$ C from 0,5 to 3% of an emulsifying agent presenting a HLB comprised between 12 and 16 and possibly concentrating the obtained dispersion through distillation up to a concentration by weight that may reach 55% in polymers.

8. A process according to claim 7, characterized in that the free radical generator system used generates free radicals soluble in the oil phase.

9. An application of the stable water in oil dispersions according to any one of claims 1 to 8, as flocculating agents.

10. An application according to claim 9, characterized in that these dispersions are used for flocculation of urban muds.

11. An application according to claim 9, characterized in that such dispersions are used for emulsion coalescence.

12. An application according to claim 9, to the paper industry as retention agents.

9